# EUROPEAN PATENT APPLICATION

(11) **EP 4 372 021 A1**
(43) Date of publication of application: **22.05.2024**
(21) Application number: 22842045.1
(22) Date of filing: 08.07.2022
(51) Int. Cl.: C08F 290/06, C08G 18/67, C08G 59/66, C08G 75/045, C09J 4/02, C09J 11/06, C09J 163/00, C09J 175/14

(54) **CURABLE RESIN COMPOSITION**

(30) Priority: 14.07.2021 JP 2021116461
(71) Applicant: Namics Corporation, Niigata-shi, Niigata 950-3131 (JP)
(72) Inventor: OTSUBO Kodai, Niigata-shi, Niigata 950-3131 (JP); SUZUKI Fumiya, Niigata-shi, Niigata 950-3131 (JP); SAKATA Yoko, Niigata-shi, Niigata 950-3131 (JP)
(74) Representative: Hoffmann Eitle
(86) International application number: PCT/JP2022/027061
(87) International publication number: WO 2023/286701

(57) **Abstract**

The object of the present invention is to provide a curable resin composition that exhibits high curability even when subjected only to heat curing treatment, and that gives, by UV curing treatment and subsequent heat curing treatment, a cured product which has moderate flexibility and elongation, and has improved shock-absorbing capacity compared to cured products provided by conventional UV- and thermo-curable adhesives. The present invention provides a curable resin composition comprising the following components (A) to (E):
(A) an urethane compound containing a (meth)acryloyl group(s),
(B) a (meth)acrylate compound containing no urethane bond,
(C) a polyfunctional thiol compound,
(D) a photo-radical initiator, and
(E) a thermal curing accelerator,
wherein
total number (total amount) of (meth)acryloyl groups for the (A) urethane compound containing a (meth)acryloyl group(s), total number (total amount) of (meth)acryloyl groups for the (B) (meth)acrylate compound containing no urethane bond, and total number (total amount) of thiol groups for the (C) polyfunctional thiol compound satisfy a predetermined relationship.

## Description

### Field of the Invention

The present invention relates to curable resin compositions, adhesives containing the same, cured products obtained by curing the same, and semiconductor devices and sensor modules containing the cured products.

### Background Art

Adhesives that are cured by a two-step process that includes curing by ultraviolet (UV) irradiation (UV curing) and subsequent curing by heating (thermal curing) (hereinafter referred to as "UV- and thermo-curable adhesives") are used in many fields (see, for example, Patent Document 1). UV- and thermo-curable adhesives are useful because they can be cured by heating, even when applied to positions where UV irradiation cannot be applied to the entire adhesive (see, for example, Patent Document 2). Some UV- and thermo-curable adhesives contain polyfunctional (meth)acrylate compounds and polyfunctional thiol compounds.

UV- and thermo-curable adhesives are often used in the manufacture of semiconductor devices, especially those requiring high-precision positioning in assembly, e.g., image sensor modules. In image sensor modules, the relative positional relationship between each component/part is extremely important. Therefore, the assembly of image sensor modules requires high-precision positioning of each component/part. When UV- and thermo-curable adhesives are used, the parts can be temporarily fixed with UV curing to prevent peeling and/or misalignment of the parts during heat curing. It also makes it possible, for example, to transport an intermediate assembly before heat curing, in which each component has been temporarily fixed by UV curing, to a location where heat curing is performed without changing the relative positional relationship between each component. Therefore, the use of UV- and thermo-curable adhesives in the manufacture of image sensor modules is extremely useful because it improves assembly efficiency.

### PRIOR ART REFERENCE

### Patent Document

Patent Document 1: Japanese Unexamined Patent Publication No. 2014-077024
Patent Document 2: WO 2018/181421

### Summary of the Invention

### Problems to be Solved by the Invention

However, conventional UV- and thermo-curable adhesives have a problem of insufficient adhesive reliability. When each component is bonded together with a UV- and thermo-curable adhesive to produce an assembly, assemblies with each component bonded by ultraviolet (UV) irradiation curing treatment (UV curing treatment) and heat curing treatment (thermal curing treatment) may be subjected to impact due to dropping or other causes. In such cases, assemblies made with conventional UV- and thermo-curable adhesives could cause the bonded parts (adherends) to partially or completely peel off.

Depending on the structure of the adherend, there may be areas in the adherend that cannot be irradiated with UV light over the entirety of the applied UV- and thermo-curable adhesives during the UV curing process. In such cases, some of the applied UV- and thermo-curable adhesives remains unreacted at the completion of the UV curing process, and the area of the UV-cured product that contributes to adhesion (i.e., UV- and thermo-curable adhesive that has experienced only UV curing treatment) is only a portion of the area of the UV- and thermo-curable adhesive that is in contact with the adherend. Because of this, a UV- and thermo-curable adhesive with excellent heat curing properties has been desired.

The object of the present invention is to provide a UV- and thermo-curable resin composition with excellent adhesive reliability that does not peel off the adherend after UV curing and heat curing, even if impacted by a drop or the like, and that exhibits high curability even when subjected to heat curing treatment only, in order to solve the problems of the conventional technologies described above.

### Means for Solving the Problems

The inventors have conducted intensive study in order to solve the above problems, and have arrived at the present invention.

In other words, the present invention encompasses, but is not limited to, the following embodiments.
[1] A curable resin composition comprising the following components (A) to (E):
   (A) an urethane compound containing a (meth)acryloyl group(s),
   (B) a (meth)acrylate compound containing no urethane bond,
   (C) a polyfunctional thiol compound,
   (D) a photo-radical initiator, and
   (E) a thermal curing accelerator,
   wherein
   the (B) (meth)acrylate compound contains a polyfunctional (meth)acrylate compound, [total number of (meth)acryloyl groups for the (A) urethane compound] / [total number of thiol groups for the (C) polyfunctional thiol compound] is 0.001 to 0.2, and [total number of (meth)acryloyl groups for the (A) urethane compound + total number of (meth)acryloyl groups for the (B) (meth)acrylate compound] / [total number of thiol groups for the (C) polyfunctional thiol compound] is 0.5 to 1.3.
[2] The curable resin composition as described in [1] above, wherein the (B) (meth)acrylate compound further contains a monofunctional (meth)acrylate compound.
[3] The curable resin composition as described in [1] or [2] above, which further contains (F) an epoxy resin, wherein [total number of (meth)acryloyl groups for the (A) urethane compound + total number of (meth)acryloyl groups for the (B) (meth)acrylate compound+ total number of epoxy groups for the (F) epoxy resin] / [total number of thiol groups for the (C) polyfunctional thiol compound] is 0.5 to 1.3, and [total number of epoxy groups for the (F) epoxy resin] / [total number of thiol groups for the (C) polyfunctional thiol compound] is <0.6.
[4] The curable resin composition as described in any one of [1] to [3] above, wherein the (C) polyfunctional thiol compound has three or more thiol groups.
[5] The curable resin composition as described in any one of [1] to [4] above, wherein the (C) polyfunctional thiol compound contains a trifunctional thiol compound and/or a tetrafunctional thiol compound.
[6] The curable resin composition as described in any one of [1] to [5] above, wherein the (A) urethane compound includes an urethane compound containing two (meth)acryloyl groups.
[7] An adhesive comprising the curable resin composition as described in any one of [1] to [6] above.
[8] A cured product obtainable by curing the curable resin composition as described in any one of [1] to [6] above or the adhesive as described in [7] above.
[9] A semiconductor device comprising the cured product as described in [8] above.
[10] A sensor module comprising the cured product as described in [8] above.

The curable resin composition of the present invention contains as essential components (A) an urethane compound containing a (meth)acryloyl group(s), (B) a (meth)acrylate compound containing no urethane bond, (C) a polyfunctional thiol compound, (D) a photo-radical initiator, and (E) a thermal curing accelerator. These components are described below.

In the present description, following conventions in the field of synthetic resins, names that include the term "resin" that usually refer to polymers (especially synthetic polymers) may be used for components of pre-cured curable resin compositions, even though the component is not a polymer.

In present description, the names "(meth)acrylic acid", "(meth)acrylate", "(meth)acryl", and "(meth)acryloyl" may be used as generic terms for "acrylic acid" (or its derivative) and "methacrylic acid" (or its derivative). Each of these terms may be used as one independent term or as part of another term. For example, the term "(meth)acrylic acid" means "acrylic acid and/or methacrylic acid", and the term "(meth)acryloyloxy group" means "acryloyloxy and/or methacryloyloxy groups".

### (A) Urethane compound containing a (meth)acryloyl group(s)

The curable resin composition of the present invention contains (A) an urethane compound. The urethane compound of the present invention contains a (meth)acryloyl group(s) in the molecule. Urethane compound means a compound containing one or more urethane bond(s) (-NH(C=O)O-). The urethane compound used in the present invention contains one or more (meth)acryloyl group(s) that react with thiol groups in the polyfunctional thiol compound described below.

The (A) urethane compound preferably contains a (meth)acryloyl group(s) in the form of a (meth)acryloyloxy group(s). The urethane compound containing a (meth)acryloyl group(s) is a compound having a structure in which one molecule of a compound containing one or more urethane bond(s) and one or more hydroxyl group(s) is being esterified with one or more molecule(s) of a (meth)acrylic acid. This urethane compound may have a hydroxyl group that is not being esterified.

Any one of (A) urethane compounds may be used alone or two or more may be used in combination. In the present invention, it is preferable that the urethane compound containing a (meth)acryloyl group(s) contains two or more (meth)acryloyl groups, and it is more preferable that the urethane compound containing a (meth)acryloyl group(s) contains two (meth)acryloyl groups.

Examples of urethane compounds containing one (meth)acryloyl group include 2-(butylcarbamoyloxy)ethyl(meth)acrylate, 2-(butylcarbamoyloxy)propyl(meth)acrylate, 4-(butylcarbamoyloxy)butyl(meth)acrylate, 2-(isopropylcarbamoyloxy)ethyl(meth)acrylate, 2-(isopropylcarbamoyloxy)propyl(meth)acrylate, 4-(isopropylcarbamoyloxy)butyl(meth)acrylate, 2-(phenylcarbamoyloxy)ethyl(meth)acrylate, 2-(phenylcarbamoyloxy)propyl(meth)acrylate, 4-(phenylcarbamoyloxy)butyl(meth)acrylate, 2-(benzylcarbamoyloxy)ethyl(meth)acrylate, 2-(benzylcarbamoyloxy)propyl(meth)acrylate, 4-(benzylcarbamoyloxy)butyl(meth)acrylate, and the like.

Urethane compounds containing two or more (meth)acryloyl groups are obtained, for example, by the reaction of a polyisocyanate compound, a polyol compound, and a (meth)acrylate monomer having an active hydrogen. Preferred urethane compounds used in the present invention include urethane compounds with polycarbonate or polyether as the main backbone from the viewpoint of high shock absorption. These urethane compounds can be purchased commercially or produced by the methods described herein or by other known methods in the art.

Examples of the polyisocyanate compounds include aliphatic polyisocyanates, aromatic-aliphatic polyisocyanates, and aromatic polyisocyanates. Among these, aromatic-aliphatic polyisocyanates and alicyclic (aliphatic cyclic) polyisocyanates are preferred in terms of rigidity and moisture resistance.

Examples of the aromatic-aliphatic polyisocyanates include m-xylylene diisocyanate, m-tetramethylxylylene diisocyanate, and the like. Any one of them may be used alone, or two or more may be used in combination.

Examples of the alicyclic polyisocyanates include isophorone diisocyanate, dicyclohexylmethane-4,4'-diisocyanate, cyclohexylenediisocyanate, methylcyclohexylenediisocyanate, bis(2-isocyanatoethyl)-4-cyclohexylene-1,2-dicarboxylate and 2,5- or 2,6-norboman diisocyanate, etc. Any one of them may be used alone, or two or more may be used in combination.

The polyol compound mentioned above is a compound with two or more active hydroxyl groups in the molecule, and examples thereof include polyether diol-based, polyester diol-based, polyolefin-based, polycarbonate diol-based compounds. Specific examples thereof include polyethylene diol, polypropylene diol, polytetramethylene ether glycol, adipate polyester polyol, polycaprolactone polyol, polycarbonate polyol, polybutadiene diol, hydrogenated polybutadiene diol, polyisoprene diol, hydrogenated polyisoprene diol, and the like. Any one of them may be used alone, or two or more may be used in combination.

Examples of the (meth)acrylate monomers with an active hydrogen include 2-hydroxyethyl (meth)acrylate, 2-hydroxypropyl (meth)acrylate, propylene glycol mono (meth)acrylate, 2-hydroxy-3-methoxypropyl (meth)acrylate and pentaerythritol tri (meth)acrylate. Instead of the aforementioned (meth)acrylate monomers with an active hydrogen, analogues thereof, such as N-methylol (meth)acrylamide, N-hydroxy (meth)acrylamide, etc., can be used. Any one of them may be used alone, or two or more may be used in combination.

The weight average molecular weight of the (A) urethane compound is preferably from 500 to 5000, more preferably from 500 to 25000, even more preferably from 700 to 15000, especially preferably from 1000 to 10,000, and most preferably from 2000 to 10,000, in terms of the shock absorption given by the curable resin composition.

The (meth)acrylate equivalent weight of the urethane compound of the invention is preferably from 250 to 12500, more preferably from 350 to 7500, even more preferably from 500 to 5000, and especially preferably from 1000 to 4500.

The urethane compound used in the present invention imparts moderate flexibility and elongation to cured products obtained by subjecting the curable resin composition of the present invention to UV curing treatment and subsequent thermal curing treatment. This flexibility and elongation greatly improves the shock-absorbing capacity of this cured product. As a result, assembled products made with the curable resin composition of the present invention are prevented from peeling off parts (adherends) even if they are subjected to impact by being dropped or otherwise.

However, urethane compounds generally have high viscosity. If the viscosity of this compound is too high, the dispensability of the curable resin composition is reduced. In the present invention, from the viewpoint of proper dispensability of the curable resin composition, the urethane compound of the present invention preferably has a viscosity at 25°C of 0.5 Pa s to 2000 Pa s, more preferably 1 mPa s to 500 Pa s, even more preferably 1 Pa s to 200 Pa·s, especially preferably 1 Pa s to 100 Pa s.

### (B) (Meth)acrylate compound containing no urethane bond

The curable resin composition of the present invention contains (B) a (meth) acrylate compound. The (meth)acrylate compound of the present invention does not contain urethane bonds in its molecule. The (meth)acrylate compounds of the present invention are compounds containing one or more (meth)acryloyl group(s) in the form of (meth)acryloyloxy group(s) that react with thiol groups in the polyfunctional thiol compound described below. However, silane coupling agents having one (meth)acrylate group are not included in the (meth)acrylate compound of the present invention. Preferably, the (meth)acrylate compound of the present invention does not contain silicon atoms.

The (B) (meth)acrylate compound may contain a (meth)acryloyl group(s) that are not in the form of a (meth)acryloyloxy group(s), as long as the above structural requirements are met. For example, N,N'-methylenebisacrylamide is not a polyfunctional (meth)acrylate compound.

The (B) (meth)acrylate compounds are broadly classified into:
- polyfunctional (meth)acrylate compounds containing two or more (meth)acryloyl groups in the form of (meth)acryloyloxy groups; and
- monofunctional (meth)acrylate compounds containing one (meth)acryloyl group in the form of a (meth)acryloyloxy group.
The (B) (meth)acrylate compounds includes a polyfunctional (meth)acrylate compound. In one embodiment of the invention, the (B) (meth)acrylate compounds further includes a monofunctional (meth)acrylate compound.

Examples of the polyfunctional (meth)acrylate compound include, but are not limited to:
- di(meth)acrylate of bisphenol A;
- di(meth)acrylate of bisphenol F;
- polyfunctional (meth)acrylate with isocyanurate skeleton;
- di(meth)acrylate of dimethylol tricyclodecane;
- polyfunctional (meth)acrylate of trimethylolpropane or an oligomer thereof;
- polyfunctional (meth)acrylate of ditrimethylolpropane;
- polyfunctional (meth)acrylate of pentaerythritol or an oligomer thereof;
- polyfunctional (meth)acrylate of dipentaerythritol;
- di(meth)acrylate of trimethylolpropane modified with neopentylglycol;
- di(meth)acrylate of polyethylene glycol;
- di(meth)acrylate of polypropylene glycol;
- di(meth)acrylate of chain or cyclic alkanediols;
- di(meth)acrylate of neopentyl glycol;
- polyesters having two or more (meth)acryloyl groups per molecule; and
- polyfunctional (meth)acrylate of glycerin.

They may be EO-modified or PO-modified. Among these, di(meth)acrylate of dimethylol tricyclodecane, (tri/tetra)(meth)acrylate of ditrimethylolpropane, hexa(meth)acrylate of dipentaerythritol, and di(meth)acrylate of neopentyl glycol modified trimethylolpropane are preferred. Any one of them may be used alone, or two or more may be used in combination. In the present description, "polyfunctional (meth)acrylate" refers to a compound containing two or more (meth)acryloyloxy groups. For example, "polyfunctional (meth)acrylate of trimethylolpropane or an oligomer thereof' refers to an ester of one molecule of trimethylolpropane or an oligomer thereof with two or more molecules of (meth)acrylic acid.

In the present invention, it is preferred that the polufunctional (meth)acrylate compound includes a bifunctional (meth)acrylate compound. Bifunctional (meth)acrylate compounds are polyfunctional (meth)acrylate compounds having a total of two (meth)acryloyl groups. Similarly, for example, trifunctional and tetrafunctional (meth)acrylate compounds are polyfunctional (meth)acrylate compounds having three and four (meth)acryloyl groups, respectively.

Among (B) (meth)acrylate compounds, the molecular weight of polyfunctional (meth)acrylate compounds is preferably from 150 to 700, more preferably from 150 to 600, even more preferably from 150 to 500, especially preferably from 180 to 495, and most preferably from 200 to 490 in terms of curability. When the polyfunctional (meth)acrylate compound is a polymer or contains multiple chemical species, the molecular weight of said polyfunctional (meth)acrylate compound represents the weight average molecular weight.

Examples of the monofunctional (meth)acrylate compound include:
- esters of monovalent alcohols and (meth)acrylic acids such as ethyl (meth)acrylate, trifluoroethyl (meth)acrylate, diethylaminoethyl (meth)acrylate, dimethylaminoethyl (meth)acrylate, glycidyl (meth)acrylate, n-butyl (meth)acrylate, isobutyl (meth)acrylate, tert-butyl (meth)acrylate, isoamyl (meth)acrylate, cyclohexyl (meth)acrylate, 2-ethylhexyl (meth)acrylate, isodecyl (meth)acrylate, isobornyl (meth)acrylate, stearyl (meth)acrylate, lauryl (meth)acrylate, phenoxyethyl (meth)acrylate, benzyl (meth)acrylate, tetrahydrofurfuryl (meth)acrylate, ethoxydiethylene glycol (meth)acrylate, phenoxydiethylene glycol (meth)acrylate, phenoxypolyethylene glycol (meth)acrylate, butoxydiethylene glycol (meth)acrylate, methoxydipropylene glycol (meth)acrylate, methoxypolyethylene glycol (meth)acrylate, methoxytriethylene glycol (meth)acrylate, methoxypolyethylene glycol (meth)acrylate, 2-ethylhexyl diethylene glycol (meth)acrylate, 4-tert-butylcyclohexyl (meth)acrylate, and 3-phenoxybenzyl(meth)acrylate;
- mono(meth)acrylates of polyhydric alcohols or esters of monovalent alcohols and (meth)acrylic acids such as 2-hydroxyethyl(meth)acrylate,2-hydroxypropyl(meth)acrylate, 2-hydroxybutyl(meth)acrylate, 2-hydroxy-3-phenoxypropyl(meth)acrylate, octyl acrylate, nonyl acrylate, isononyl acrylate, 3,3,5-trimethylcyclohexyl acrylate, cyclic trimethylolpropane formal acrylate, 1-naphthalene methyl(meth)acrylate, 1-ethylcyclohexyl (meth)acrylate, 1-methylcyclohexyl (meth)acrylate, 1-ethylcyclopentyl (meth)acrylate, 1-methylcyclopentyl(meth)acrylate, dicyclopentenyl(meth)acrylate, dicyclopentenyloxyethyl(meth)acrylate, dicyclopentanyl(meth)acrylate, nonylphenoxy polyethylene glycol(meth)acrylate, tetrahydrodicyclopentadienyl(meth)acrylate, 2-(o-phenylphenoxy)ethyl(meth)acrylate, isobomylcyclohexyl(meth)acrylate, (2-methyl-2-ethyl-1,3-dioxolan-4-yl)methyl(meth)acrylate, 1-adamantyl(meth)acrylate, 3-hydroxy-1-adamantyl(meth)acrylate, 2-methyl-2-adamantanyl(meth)acrylate, 2-ethyl-2-adamantanyl(meth)acrylate, 2-isopropyladamantan-2-yl(meth)acrylate, 3-hydroxy-1-adamantyl(meth)acrylate, (adamantan-1-yloxy)methyl(meth)acrylate, 2-isopropyl-2-adamantyl(meth)acrylate, 1-methyl-1-ethyl-1-adamantylmethanol(meth)acrylate,1,1-diethyl-1-adamantylmethanol(meth)acrylate, 2-cyclohexylpropan-2-yl(meth)acrylate, 1-isopropylcyclohexyl(meth)acrylate, 1-methylcyclohexyl(meth)acrylate, 1-ethylcyclopentyl(meth)acrylate, 1-methylcyclohexyl(meth)acrylate, tetrahydropyranyl(meth)acrylate, tetrahydro-2-furanyl(meth)acrylate, 2-oxotetrahydrofuran-3-yl(meth)acrylate, (5-oxotetrahydrofuran-2-yl)methyl(meth)acrylate, (2-oxo-1,3-dioxolan-4-yl)methyl(meth)acrylate, 1-ethoxyethyl(meth)acrylate; and the like. Any one of them may be used alone, or two or more may be used in combination.

Of (B) (meth)acrylate compounds, the molecular weight of the monofunctional (meth)acrylate compound is preferably from 100 to 400, more preferably from 120 to 380, even more preferably from 140 to 360, and especially preferably from 160 to 340 in terms of curability. When the monofunctional (meth)acrylate compound is a polymer or contains multiple chemical species, the molecular weight of said monofunctional (meth)acrylate compound represents the weight average molecular weight.

When the (meth)acrylate compound of the present invention contains a monofunctional (meth)acrylate compound in addition to the polyfunctional (meth)acrylate compound, thiol groups of the polyfunctional thiol compound are in excess of (meth)acryloyl groups of the urethane compound and the polyfunctional (meth)acrylate compound. This excess of thiol groups reacts with the (meth)acryloyl groups of the monofunctional (meth)acrylate compound under UV irradiation and/or heating. The reaction between the (meth)acryloyl group of the monofunctional (meth)acrylate compound and thiol groups does not form cross-links. As a result, the resulting cured product has a lower crosslink density than cured products obtained from curable resin compositions that do not contain monofunctional (meth)acrylate compounds. This reduction in crosslink density may improve the flexibility of the cured product and improve its physical properties. For example, the shock-absorbing capacity of the cured product may be further improved, and the cured product may be less likely to peel off from the adherend.

A monofunctional (meth)acrylate compound may also be added to the curable resin composition of the present invention as a viscosity modifier. As described above, the above (A) urethane compound has high viscosity, so when the curable resin composition of the present invention contains a monofunctional (meth)acrylate compound in addition to a polyfunctional (meth)acrylate compound, it is easier to achieve appropriate dispensability.

When the (meth)acrylate compound of the present invention contains a monofunctional (meth)acrylate compound in addition to the polyfunctional (meth)acrylate compound, [total number of (meth)acryloyl groups for the monofunctional (meth)acrylate compound] / [total number of thiol groups for the (C) polyfunctional thiol compound] is preferably 0.01 to 0.5, and more preferably 0.1 to 0.4. When [total number of (meth)acryloyl groups for the monofunctional (meth)acrylate compound] / [total number of thiol groups for the (C) polyfunctional thiol compound] is within the above range, there are advantages including a further improvement in the drop resistance of the cured product, a decrease in the viscosity of the curable resin composition, and an improvement in dispensability.

When [total number of (meth)acryloyl groups for the monofunctional (meth)acrylate compound] / [total number of thiol groups for the (C) polyfunctional thiol compound] is >0.5, insufficient reactivity during UV and thermal curing may occur.

### (C) Polyfunctional thiol compound

The curable resin composition of the present invention contains (C) a polyfunctional thiol compound. The polyfunctional thiol compounds used in the present invention are compounds containing two or more thiol groups that react with (meth)acryloyl groups (or more precisely, double bonds therein) in the aforementioned urethane compounds and (meth)acrylate compounds, and with epoxy groups in epoxy resins. The polyfunctional thiol compound preferably has three or more thiol groups. It is more preferred that the polyfunctional thiol compound includes a trifunctional and/or tetrafunctional thiol compound. Trifunctional and tetrafunctional thiol compounds are thiol compounds with three and four thiol groups, respectively.

Polyfunctional thiol compounds are broadly classified into thiol compounds with hydrolyzable substructures such as ester bonds in their molecules (i.e., hydrolyzable thiol compounds) and thiol compounds without such substructures (i.e., nonhydrolyzable thiol compounds).

Examples of the hydrolyzable polyfunctional thiol compound include trimethylolpropane tris(3-mercaptopropionate) (trade name: TMMP; available from SC Organic Chemical Co., Ltd.), tris[(3-mercaptopropionyloxy)-ethyl]-isocyanurate (trade name: TEMPIC; available from SC Organic Chemical Co., Ltd.), pentaerythritol tetrakis(3-mercaptopropionate) (trade name: PEMP; available from SC Organic Chemical Co., Ltd.), tetraethyleneglycol bis(3-mercaptopropionate) (trade name: EGMP-4; available from SC Organic Chemical Co., Ltd.), dipentaerythritol hexakis(3-mercaptopropionate) (trade name: DPMP; available from SC Organic Chemical Co., Ltd.), pentaerythritol tetrakis(3-mercaptobutyrate) (trade name: Karenz MT^{®} PE1; available from Showa Denko K.K.), 1,3,5-tris(3-mercaptobutyryloxyethyl)-1,3,5-triazine-2,4,6(1H,3H,SH)-trione (trade name: Karenz MT^{®} NR1; available from Showa Denko K.K.), and the like. Any one of them may be used alone, or two or more may be used in combination.

Examples of the non-hydrolyzable polyfunctional thiol compound include 1,3,4,6-tetrakis(2-mercaptoethyl)glycoluril (trade name: TS-G, available from Shikoku Chemicals Corporation), 1,3,4,6-tetrakis(3-mercaptopropyl)glycoluril (trade name: C3 TS-G, available from Shikoku Chemicals Corporation), 1,3,4,6-tetrakis(mercaptomethyl)glycoluril, 1,3,4,6-tetrakis(mercaptomethyl)-3a-methylglycoluril, 1,3,4,6-tetrakis(2-mercaptoethyl)-3a-methylglycoluril, 1,3,4,6-tetrakis(3-mercaptopropyl)-3a-methylglycoluril, 1,3,4,6-tetrakis(mercaptomethyl)-3a, 6a-dimethylglycoluril, 1,3,4,6-tetrakis(2-mercaptoethyl)-3a,6a-dimethylglycoluril, 1,3,4,6-tetrakis(3-mercaptopropyl)-3a,6a-dimethylglycoluril, 1,3,4,6-tetrakis(mercaptomethyl)-3 a,6a-diphenylglycoluril, 1,3,4,6-tetrakis(2-mercaptoethyl)-3a,6a-diphenylglycoluril, 1,3,4,6-tetrakis(3-mercaptopropyl)-3a,6a-diphenylglycoluril, tris(3-mercaptopropyl)isocyanurate, 1,3,5-tris[3-(2-mercaptoethylsulfanyl)propyl isocyanurate, 1,3,5-tris[2-(3-mercaptopropoxy)ethyl]isocyanurate, pentaerythritol tripropanethiol (trade name: PEPT, available from SC Organic Chemical Co., Ltd.), pentaerythritol tetrapropanethiol, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl) 3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,1 1-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4, 8, 9-tetrakis(mercaptomethylthio)-1,11-dimercapto-2, 5, 7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-(2-(1,3-dithietanyl)]metbyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, 3-[2-(1,3-dithietanyl)]methyl-7,9,13,15-tetrakis(mercaptomethylthio)-1,17-dimercapto-2,4,6,10,12,16-hexathiaheptadecane, 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl} -1,3-dithietane, 2-[3,4-bis(mercaptomethylthio)-6-mercapto-2,5-dithiahexylthio]mercaptomethylthiomethyl-1,3-dithietane, 2-[3,4,8,9-tetrakis(mercaptomethylthio)-11-mercapto-2,5,7,10-tetrathiaundecylthio]mercaptomethylthiomethyl-1,3-dithietane, 2-[3-bis(mercaptomethylthio)methyl-5,6-bis(mercaptomethylthio)-8-mercapto-2,4,7-trithiaoctyl]mercaptomethylthiomethyl-1,3-dithietane, 4-11-[2-(1,3-dithietanyl)]-3-mercapto-2-thiapropylthio}-5-[1,2-bis(mercaptomethylthio)-4-mercapto-3-thiabutylthio]-1,3-dithiolane, and the like. Any one of them may be used alone, or two or more may be used in combination.

The curable resin composition of the present invention must satisfy the prescribed relationship with regard to:
- the total number (total amount) of (meth)acryloyl groups contained in the (A) urethane compound containing a (meth)acryloyl group(s),
- the total number (total amount) of (meth)acryloyl groups in the (B) (meth)acrylate compound containing no urethane bond, and
- total number (total amount) of thiol groups in the (C) polyfunctional thiol compound.

Specifically, in the curable resin composition of the present invention, [total number of (meth)acryloyl groups for the (A) urethane compound] / [total number of thiol groups for the (C) polyfunctional thiol compound] is 0.001 to 0.2, and [total number of (meth)acryloyl groups for the (A) urethane compound + total number of (meth)acryloyl groups for the (B) (meth)acrylate compound] / [total number of thiol groups for the (C) polyfunctional thiol compound] is 0.5 to 1.3

The total number of (meth)acryloyl groups for urethane compound containing a (meth)acryloyl group(s) is the number of (meth)acryloyl groups (equivalent number) per weight (charged amount) of the urethane compound, and it is the quotient of the weight (g) of the urethane compound divided by the (meth)acryloyl equivalent weight of that urethane compound (the sum of such quotients for each urethane compound, if more than one urethane compound is included.). The (meth)acryloyl equivalent weight of urethane compound is theoretically equal to the number obtained by dividing the molecular weight of the urethane compound by the number of acryloyl groups (or methacryloyl groups) in one molecule.

The total number of (meth)acryloyl groups for the (meth)acrylate compound containing no urethane bond can also be determined in the same way as for the urethane compound.

The total number of thiol groups of a polyfunctional thiol is the number of thiol groups (equivalent number) per weight (charged amount) of the polyfunctional thiol, and it is the quotient of the weight (g) of the thiol compound divided by the thiol equivalent weight of that thiol compound (the sum of such quotients for each thiol compound, if more than one thiol compound is included.). The actual thiol equivalent weight can be determined, for example, by determining the thiol value by potentiometry. This method is widely known and is disclosed, for example, in paragraph 0079 of JP 2012-153794 A. If the thiol equivalent weight cannot be determined by this method, it can be calculated as the quotient of the molecular weight of the polyfunctional thiol compound divided by the number of thiol groups in one molecule of the polyfunctional thiol compound.

When [total number of (meth)acryloyl groups for the (A) urethane compound] / [total number of thiol groups for the (C) polyfunctional thiol compound] is more than 0.2, problems such as poor dispensing performance during dispensing and insufficient curability may occur. On the other hand, when [total number of (meth)acryloyl groups for the (A) urethane compound] / [total number of thiol groups for the (C) polyfunctional thiol compound] is less than 0.001, the flexibility of the cured product becomes insufficient, and the cured product tends to peel off from the adherend.

In the present invention, [total number of (meth)acryloyl groups for the (A) urethane compound] / [total number of thiol groups for the (C) polyfunctional thiol compound] is preferably 0.001 to 0.15, more preferably 0.001 to 0.125, and even more preferably 0.002 to 0.1.

When [total number of (meth)acryloyl groups for the (A) urethane compound + total number of (meth)acryloyl groups for the (B) (meth)acrylate compound] / [total number of thiol groups for the (C) polyfunctional thiol compound] is less than 0.5, curability may be insufficient. On the other hand, when [total number of (meth)acryloyl groups for the (A) urethane compound + total number of (meth)acryloyl groups for the (B) (meth)acrylate compound] / [total number of thiol groups for the (C) polyfunctional thiol compound] is more than 1.3, curability may be insufficient.

In the present invention, [total number of (meth)acryloyl groups for the (A) urethane compound + total number of (meth)acryloyl groups for the (B) (meth)acrylate compound] / [total number of thiol groups for the (C) polyfunctional thiol compound] is preferably 0.6 to 1.3, more preferably 0.7 to 1.2, even more preferably 0.8 to 1.2, and especially preferably 0.9 to 1.1.

### (D) Photo-radical initiator

The curable resin composition of the present invention contains a photo-radical initiator. The inclusion of a photo-radical initiator makes it possible to cure the curable resin composition with a short UV irradiation time. Photo-radical initiators that can be used in the present invention are not particularly limited, and known ones can be used. Examples pf photo-radical initiators include 1-hydroxycyclohexylphenyl ketone, 2-hydroxy-2-methyl-1-phenylpropan-1-one, diethoxyacetophenone, 1-(4-isopropylphenyl)-2-hydroxy-2-methylpropan-1-one,1-(4-dodecylphenyl)-2-hydroxy-2-methylpropan-1-one, 4-(2-hydroxyethoxy)-phenyl(2-hydroxy-2-propyl)ketone, 2-methyl-1-[4-(methylthio)phenyl]-2-morpholinopropan-1-one, benzoin, benzoin methyl ether, benzoin ethyl ether, benzoin isopropyl ether, benzoin n-butyl ether, benzoin phenyl ether, benzyl dimethyl ketal, benzophenone, benzoylbenzoate, methyl benzoylbenzoate, 4-phenylbenzophenone, hydroxybenzophenone, acrylated benzophenone, 4-benzoyl-4'-methyldiphenylsulfide, 3,3'-dimethyl-4-methoxybenzophenone, thioxansone, 2-chlorothioxansone, 2-methylthioxansone, 2,4-dimethylthioxansone, isopropylthioxansone, 2,4-dichlorothioxansone, 2,4-diethylthioxansone, 2,4-diisopropylthioxansone, 2,4,6-trimethylbenzoyl diphenylphosphine oxide, methylphenylglyoxylate, benzyl, camphorquinone, and the like. Any one of them may be used alone, or two or more may be used in combination.

### (E) Thermal curing accelerator

The curable resin composition of the present invention contains a thermal curing accelerator. The inclusion of a thermal curing accelerator allows the curable resin composition to cure in a short time even under low temperature conditions. In one embodiment of the present invention, the thermal curing accelerator is a basic substance. The basic substance preferably includes tertiary amine and/or imidazole compounds. The use of these basic substances can efficiently promote the curing reaction between thiol groups and (meth)acryloyl groups. The thermal curing accelerator is preferably a latent curing catalyst. A latent curing catalyst is a compound that is inactive at room temperature and is activated by heating to function as a curing catalyst. Examples of the latent curing catalyst include imidazole compounds that are solid at room temperature; solid dispersion type amine adduct latent curing catalysts such as reaction products of amine compounds and epoxy compounds (amine-epoxy adduct type latent curing catalysts); reaction products of amine compounds and isocyanate compounds or urea compounds (urea type adduct type latent curing catalysts).

Typical examples of commercially available latent curing catalyst products containing tertiary amine and/or imidazole compounds include, but are not limited to, Ajicure PN-23 (trade name; Ajinomoto Fine-Techno Co., Inc.), Ajicure PN-40 (trade name; Ajinomoto Fine-Techno Co., Inc.), Ajicure PN-50 (trade name; Ajinomoto Fine-Techno Co., Inc.), Novacure HX-3742 (trade name; Asahi Kasei Corp.), Novacure HX-3721 (trade name; Asahi Kasei Corp.), Novacure HXA9322HP (trade name; Asahi Kasei Corp.), Novacure HXA3922HP (trade name; Asahi Kasei Corp.), Novacure HXA3932HP (trade name; Asahi Kasei Corp.), Novacure HXA9382HP (trade name; Asahi Kasei Corp.), Fujicure FXR1121 (trade name; T & K TOKA Co., Ltd.), Fujicure FXE-1000 (trade name; T & K TOKA Co., Ltd.), Fujicure FXR-1020 (trade name; T & K TOKA Co., Ltd.), Fujicure FXR-1030 (trade name; T & K TOKA Co., Ltd.), and the like. Any one of thermal curing accelerators may be used alone, or two or more may be used in combination. As a thermal curing accelerator, solid-dispersion amine adduct-type latent curing catalysts are preferred from the viewpoint of pot life and curing performance.

The thermal curing accelerator may be provided in the form of a dispersion dispersed in a polyfunctional epoxy resin. It should be noted that, when the thermal curing accelerator is used in such form, the amount of the polyfunctional epoxy resin in which the thermal curing accelerator is dispersed is also included in the amount of the epoxy resin described below optionally present in the curable resin composition of the present invention.

The curable resin composition of the present invention has a viscosity, measured at 25°C, of preferably 1 Pa·s to 100 Pa·s, more preferably 5 Pa·s to 90 Pa·s, even more preferably 10 Pa·s to 80 Pa·s, and especially preferably 20 Pa·s to 70 Pa·s, in terms of proper dispensability. Viscosity can be measured, for example, using a Brookfield DV1 Digital Viscometer, spindle SC4-14, at a rotational speed of 50 rpm.

The curable composition of the present invention may, if desired, contain optional components other than the above components (A) through (E), such as an epoxy resin and additives described below, as needed.

### (F) Epoxy resin

The curable resin composition of the present invention may contain (F) an epoxy resin if desired. The epoxy resins are compounds containing one or more epoxy group(s) that react with thiol groups in the polyfunctional thiol compounds. Normally, an epoxy group and a thiol group do not react with each other under UV irradiation, but they can react with each other under heating.

Epoxy resins are broadly classified into monofunctional epoxy resins and polyfunctional epoxy resins. The epoxy resin may contain only one of these or both.

Monofunctional epoxy resins are epoxy resins containing one epoxy group. Examples of monofunctional epoxy resins include, but are not limited to, n-butyl glycidyl ether, 2-ethylhexyl glycidyl ether, phenyl glycidyl ether, kresyl glycidyl ether, p-s-butylphenyl glycidyl ether, styrene oxide, α-pinene oxide, 4-tert-butylphenyl glycidyl ether, neodecanoic acid glycidyl ester, 2-(4,4-dimethylpentan-2-yl)-5,7,7-trimethyloctanoic acid glycidyl ester, and the like. Any one of them may be used alone, or two or more may be used in combination.

Polyfunctional epoxy resins are epoxy resins containing two or more epoxy groups. Polyfunctional epoxy resins are broadly classified into aliphatic polyfunctional epoxy resins and aromatic polyfunctional epoxy resins. Aliphatic polyfunctional epoxy resins are polyfunctional epoxy resins with a structure that does not contain aromatic rings. Examples of aliphatic polyfunctional epoxy resins include, but are not limited to:
- diepoxy resins such as (poly)ethylene glycol diglycidyl ether, (poly)propylene glycol diglycidyl ether, butanediol diglycidyl ether, neopentyl glycol diglycidyl ether, 1,6-hexanediol diglycidyl ether, trimethylolpropane diglycidyl ether, polytetramethylene ether glycol diglycidyl ether, glycerol diglycidyl ether, neopentyl glycol diglycidyl ether, 1,2-epoxy-4-(2-methyloxiranyl)-1-methylcyclohexane, cyclohexane type diglycidyl ether, and dicyclopentadiene type diglycidyl ether;

- triepoxy resins such as trimethylolpropane triglycidyl ether, glycerin triglycidyl ether;
- alicyclic epoxy resins such as vinyl (3,4-cyclohexene) dioxide, 2-(3,4-epoxycyclohexyl)-5,1-spiro-(3,4-epoxycyclohexyl)-m-dioxane;
- glycidylamine type epoxy resins such as tetraglycidyl bis(aminomethyl)cyclohexane;
- hydantoin type epoxy resins such as 1,3-diglycidyl-5-methyl-5-ethylhydantoin; and
- epoxy resins with silicone skeleton such as 1,3-bis(3-glycidoxypropyl)-1,1,3,3-tetramethyldisiloxane.
Any one of them may be used alone, or two or more may be used in combination.

Aromatic polyfunctional epoxy resins are polyfunctional epoxy resins with structures containing aromatic rings. Many epoxy resins frequently used in the past, such as bisphenol A epoxy resins, are of this type. Examples of aromatic polyfunctional epoxy resins include, but are not limited to:
- bisphenol A epoxy resins;
- branched polyfunctional bisphenol A epoxy resins such as -p-glycidyloxyphenyl dimethyl tris-bisphenol A diglycidyl ether;
- bisphenol F epoxy resins;
- novolac epoxy resins;
- tetrabromobisphenol A epoxy resin;
- fluorene epoxy resin;
- biphenyl aralkyl epoxy resins;
- diepoxy resins such as 1,4-phenyldimethanol diglycidyl ether;
- biphenyl epoxy resins such as 3,3',5,5'-tetramethyl-4,4'-diglycidyloxybiphenyl;
- glycidylamine epoxy resins such as diglycidylaniline, diglycidyltoluidine, triglycidyl-p-aminophenol, and tetraglycidyl-m-xylylenediamine; and
- naphthalene ring-containing epoxy resins.
Any one of them may be used alone, or two or more may be used in combination.

When the curable resin composition of the present invention contains an epoxy resin, it is preferred that: [total number of (meth)acryloyl groups for the (A) urethane compound + total number of (meth)acryloyl groups for the (B) (meth)acrylate compound+ total number of epoxy groups for the (F) epoxy resin] / [total number of thiol groups for the (C) polyfunctional thiol compound] is 0.5 to 1.3, and [total number of epoxy groups for the (F) epoxy resin] / [total number of thiol groups for the (C) polyfunctional thiol compound] is <0.6.

When the curable resin composition of the present invention contains an epoxy resin, it is particularly preferred that [total number of epoxy groups for the (F) epoxy resin] / [total number of thiol groups for the (C) polyfunctional thiol compound] is ≥0.05. In one aspect of the invention, [total number of epoxy groups for the (F) epoxy resin] / [total number of thiol groups for the (C) polyfunctional thiol compound] is 0.05 to 0.6, and preferably 0.2 to 0.4.

In the curable resin composition of the present invention, when the total number of (meth)acryloyl groups for the (A) urethane compound, the total number of (meth)acryloyl groups for the (B) (meth)acrylate compound, the total number of thiol groups for the (C) polyfunctional thiol compound and the total number of epoxy groups for the (F) epoxy resin satisfy the above relationship, the thiol groups of the polyfunctional thiol compound are in excess of the (meth)acryloyl groups of the urethane compound and the (meth)acrylate compound. This excess of thiol groups reacts with epoxy groups under heating. In practice, however, the reaction between the epoxy groups and thiol groups hardly forms cross-links because the UV curing treatment forms a polymer and restricts the movement of the epoxy resin in the system. As a result, the resulting cured product has a lower crosslink density and is more flexible than cured products obtained from curable resin compositions that do not contain epoxy resin. This flexibility further improves the shock-absorbing capacity of the cured product and makes it more difficult for the cured product to peel off from the adherend. Since epoxy groups react with thiol groups, ring-opening of the epoxy groups in the epoxy resin occurs and hydroxyl groups are generated. The hydroxyl groups can contribute to improving the adhesive strength of the cured product to the adherend, and thus preventing the cured product from peeling off from the adherend.

The total number of epoxy groups for an epoxy resin is the number (equivalent number) of epoxy groups per weight (charged amount) of the epoxy resin, and it is the quotient of the weight (g) of the epoxy resin divided by the epoxy equivalent weight of that epoxy resin (the sum of such quotients for each epoxy resin, if more than one epoxy resin is included.). The actual epoxy equivalent weight can be determined by the method described in JIS K7236. If the epoxy equivalent weight cannot be determined by this method, it can be calculated as the quotient of the molecular weight of the epoxy resin divided by the number of epoxy groups in one molecule of the epoxy resin.

### - Filler

The curable resin composition of the present invention may contain a filler, especially a silica filler and/or a talc filler, if desired. A filler can be added to improve the thermal cycle resistance of cured products obtained by curing the curable resin composition of the present invention. The addition of a filler improves thermal cycling resistance because the linear expansion coefficient of the cured product is reduced, i.e., the expansion and contraction of the cured product due to thermal cycling is suppressed. Shrinkage during curing is also suppressed.

When a filler is used, its average particle diameter is preferably 0.1 to 10 µm. In the present description, the average particle diameter refers to the volume-based median diameter (d50) measured by the laser diffraction method in accordance with ISO-13320 (2009), unless otherwise noted.

When a filler is used, its content is preferably 1 to 70% by mass and more preferably 5 to 60% by mass, relative to the total mass of the curable resin composition.

Any one of fillers may be used alone, or two or more may be used in combination. Specific examples of fillers other than silica and talc fillers include, but are not limited to, alumina fillers, calcium carbonate fillers, polytetrafluoroethylene (PTFE) fillers, silicone fillers, acrylic fillers, and styrene fillers.

In the present invention, fillers may also be surface treated.

### - Stabilizer

The curable resin composition of the present invention may contain a stabilizer if desired. Stabilizers can be added to the curable resin composition of the present invention to improve their storage stability and extend their pot life. Various stabilizers known as stabilizers for one-component adhesives can be used. At least one selected from the group consisting of liquid boric acid ester compounds, aluminum chelates and organic acids is preferred due to its effectiveness in improving storage stability.

Examples of the liquid boric acid ester compounds include 2,2'-oxybis(5,5'-dimethyl-1,3,2-oxaborinane), trimethylborate, triethylborate, tri-n-propylborate, triisopropylborate, tri-n-butylborate, tripentylborate, triallylborate, trihexylborate, tricyclohexylborate, trioctylborate, trinonylborate, tridecylborate, tridododecylborate, trihexadecylborate, trioctadecylborate, tris(2-ethylhexyloxy)borane, bis(1,4,7,10-tetraoxaundecyl)(1,4,7,10,13-pentaoxatetradecyl)(1,4,7-trioxaundecyl)borane, tribenzylborate, triphenylborate, tri-o-tolylborate, tri-m-tolylborate, triethanolamineborate, and the like. Liquid boric acid ester compounds are preferred because they are liquid at room temperature (25°C), which keeps the composition viscosity low. For example, Aluminum Chelate A (from Kawaken Fine Chemicals Co., Ltd.) can be used as aluminum chelate. Barbituric acid, for example, may be used as an organic acid.

When the curable resin composition of the present invention contains a stabilizer, the amount of the stabilizer is preferably 0.01 to 30 parts by mass, more preferably 0.05 to 25 parts by mass, and even more preferably 0.1 to 20 parts by mass with respect to 100 parts by mass of the total curable resin composition.

### - Coupling agent

The curable resin composition of the present invention may contain a coupling agent if desired. The addition of a coupling agent, especially a silane coupling agent, is preferred from the viewpoint of improving adhesive strength. Silane coupling agents are organosilicon compounds having two or more different functional groups in their molecules, including functional groups that can chemically bond with inorganic materials and organic materials. In general, the functional groups that can chemically bond to inorganic materials are hydrolysable silyl groups, and silyl groups, including alkoxy groups, especially methoxy and/or ethoxy groups, are used as this functional group. Vinyl, epoxy, (meth)acryl, styryl, unsubstituted or substituted amino, mercapto, ureido, and isocyanate groups are used as functional groups that can chemically bond with organic materials. Various silane coupling agents with the aforementioned functional groups can be used as coupling agents. Specific examples of silane coupling agents include 3-glycidoxypropyltrimethoxysilane, 3-aminopropyltrimethoxysilane, vinyltrimethoxysilane, 3-triethoxysilyl-N-(1,3-dimethylbutylidene)propylamine, 2-(3,4-epoxycyclohexyl)ethyltrimethoxysilane, p-styryltrimethoxysilane, 3-methacryloxypropyl methyltrimethoxysilane, 3-acryloxypropyltrimethoxysilane, 8-glycidoxyoctyltrimethoxysilane, 3-ureidopropyltriethoxysilane, 3-mercaptopropyltrimethoxysilane, bis(triethoxysilylpropyl)tetrasulfide, 3-isocyanate propyltriethoxysilane, etc.. Any one of silane coupling agents may be used alone, or two or more may be used in combination.

Silane coupling agents (including those used for surface treatment of the above fillers) may have reactive functional groups such as (meth)acryloyl groups or epoxy groups. In the present invention, however, silane coupling agents are not included in components (A) through (F).

When the curable resin composition of the present invention contains a coupling agent, the amount of the coupling agent is preferably from 0.01 to 50 parts by mass, and more preferably from 0.1 to 30 parts by mass, relative to 100 parts by mass of the total curable resin composition from the viewpoint of improving adhesive strength.

### - Thixotropic agent

The curable resin composition of the present invention may contain a thixotropic agent if desired. The thixotropic agents used in the present invention are not particularly limited and can be any known thixotropic agent. Examples of thixotropic agents used in the present invention include, but are not limited to, silica. Silica may be natural silica (silica stone, quartz, etc.) or synthetic silica. Synthetic silica can be synthesized by any method, including dry and wet methods.

The thixotropic agent may also be surface treated with a surface treatment agent (e.g., polydimethylsiloxane). In the present invention, it is preferred that at least a portion of the thixotropic agent is surface treated. The average diameter of the primary particles of the thixotropic agent is preferably 5 to 50 nm.

The curable resin composition of the present invention preferably contains a thixotropic agent in an amount of 0.1 to 30% by mass, more preferably in an amount of 1 to 20% by mass, and especially preferably in an amount of 1 to 15% by mass, relative to the total mass of the curable resin composition.

### - Other additives

The curable resin composition of the present invention may, if desired, further contain other additives, such as carbon black, titanium black, an ion trap agent, a leveling agent, an antioxidant, a defoaming agent, a viscosity adjuster, a flame retardant, a colorant, a solvent, and the like, to the extent that the purpose of the present invention is not compromised. The type and amount of each additive is as usual.

The method of producing the curable resin composition of the present invention is not limited. For example, components (A) to (E), and component (F) and other additives, if necessary, can be introduced simultaneously or separately into an appropriate mixing machine and mixed by stirring while melting by heating if necessary, to obtain a uniform composition as the curable resin composition of the present invention. The mixing machine is not limited, and can be a ricer, Henschel mixer, 3-roll mill, ball mill, planetary mixer, bead mill, and the like, equipped with an agitator and heating device. A combination of these devices may also be used as appropriate.

The curable resin composition thus obtained can be converted to a cured product by subjecting it to a curing treatment including:
- curing treatment by ultraviolet (UV) irradiation (UV curing treatment), and/or
- curing treatment by heating (thermal curing treatment).

UV curing can be performed by making the curable resin composition of the invention receive a sufficient integrated amount of UV light at room temperature. The irradiation intensity is preferably from 100 to 1000 mW/cm², and more preferably from 1000 to 9000 mW/cm². The wavelength of the UV light is preferably 315-450 nm, more preferably 340-430 nm, and especially preferably 350-380 nm. The UV light source is not limited, and gallium nitride-based UV-LEDs and the like can be used. The integrated light intensity of UV light received by the curable resin composition is preferably 200 mJ/cm² or more, more preferably 500 mJ/cm² or more, even more preferably 1000 mJ/cm² or more, and especially preferably 2000 mJ/cm² or more. There is no particular limit to the upper limit of the integrated light intensity, which can be set freely within the range that does not impair the purpose of the present invention. The integrated light intensity of ultraviolet light can be measured using measurement equipment commonly used in the field, such as ultraviolet light meters and photodetectors. For example, the integrated light intensity in the wavelength range of ultraviolet light (310-390 nm) with a central wavelength of 365 nm can be measured using a UV integrated light meter (UIT-250, available from Ushio Inc.) and a photodetector (UVD-S365, available from Ushio Inc.).

Thermal curing, on the other hand, can be performed by heating the curable resin composition of the invention after UV curing under appropriate conditions. This heating is preferably performed at 60-120°C, more preferably at 60-100°C, and especially preferably at 70-90°C. This heating is preferably performed for 5 to 180 minutes, more preferably for 10 to 120 minutes, and especially preferably for 20 to 70 minutes.

The cured product obtained by subjecting the curable resin composition of the present invention to UV curing treatment and subsequent thermal curing treatment has improved flexibility and elongation compared to the cured product provided by conventional UV- and thermo-curable adhesives, and the shock-absorbing capacity is also greatly improved accordingly. Therefore, even if an assembly made with the curable resin composition is subjected to an accidental impact such as dropping, peeling of parts (adherends) is prevented. The curable resin compositions of the present invention also exhibit sufficient curability when subjected to heat treatment only to produce a cured product. This property of the curable resin composition of the present invention contributes to further adhesive reliability improvement, even when UV curing and subsequent thermal curing treatments are performed. This is because this means that even if there are portions of the curable resin composition that are not UV irradiated during the UV curing process, those portions will be sufficiently cured by the subsequent thermal curing.

The curable resin composition of the present invention can be used, for example, as adhesives or raw materials thereof for joining semiconductor devices containing various electronic components or parts comprising electronic components.

In the present invention, an adhesive containing the curable resin composition of the present invention is also provided. The adhesive is suitable, for example, for fixing modules and electronic components.

Also provided in the present invention is a cured product obtained by curing the curable resin composition or the adhesive of the present invention by UV curing treatment and/or thermal curing treatment. Preferably, the cured product is prepared by UV curing followed by thermal curing. In the present invention, there is also provided a semiconductor device including the cured product of the present invention. In the present invention, there is also provided a sensor module including the semiconductor device of the present invention.

### Examples

Hereinbelow, the present invention will be described in more detail with reference to the following Examples, which should not be construed as limiting the scope of the present invention. In the following examples, parts and percentages refer to parts by mass and percentages by mass, unless otherwise noted.

### Examples 1 to 20, and Comparative Examples 1 to 4

Each of curable resin compositions was prepared by mixing each of the components in the amounts according to the formulations shown in Table 1 using a three-roll mill. In Table 1, the amount of each component is expressed in parts by mass (unit: g).

### - (A) Urethane compound containing a (meth)acryloyl group(s)

In the examples and comparative examples, the compounds used as a urethane compound containing a (meth)acryloyl group(s) are as follows.
(A-1): Polyether urethane acrylate (trade name: ART RESIN UN-6200, available from Negami Chemical Industrial Co., Ltd., (meth)acryloyl equivalent weight: 3250 g/eq)
(A-2): Adduct-type urethane acrylate (trade name: ART RESIN UN-2601, available from Negami Chemical Industrial Co., Ltd., (meth)acryloyl equivalent weight: 800 g/eq)
(A-3): Soft urethane acrylate (trade name: SHIKOH^{®} UV-3000B, available from Mitsubishi Chemical Group Corporation, (meth)acryloyl equivalent weight: 9000 g/eq)
(A-4): Polycarbonate urethane acrylate (trade name: UN-9200A, available from Negami Chemical Industrial Co., Ltd., (meth)acryloyl equivalent weight: 7500 g/eq)
(A-5): Soft urethane acrylate (trade name: SHIKOH^{®} UV-2000B, available from Mitsubishi Chemical Group Corporation, (meth)acryloyl equivalent weight: 6500 g/eq)
(A-4): Polycarbonate urethane acrylate (trade name: UN-5590, available from Negami Chemical Industrial Co., Ltd., (meth)acryloyl equivalent weight: 4500 g/eq)

### - (B) (Meth)acrylate compound containing no urethane bond

In the examples and comparative examples, the compounds used as (meth)acrylate compounds containing no urethane bond are as follows.

### (b1) Polyfunctional (meth)acrylate compound

(B-1): Dimethylol tricyclodecanediacrylate (trade name: Light Acrylate DCP-A, available from Kyoeisha Chemical Co., Ltd., (meth)acryloyl equivalent weight: 152 g/eq)
(B-2): 2-(2-acryloyloxy-1,1-dimethylethyl)-5-acryloyloxymethyl-5-ethyl-1,3-dioxane (trade name: KAYARAD R-604, Nippon Kayaku Co., Ltd., (meth)acryloyl equivalent weight: 163 g/eq)
(B-3): Ditrimethylolpropane tetraacrylate (trade name: EBECRYL 140, available from DAICEL-ALLNEX LTD., (meth)acryloyl equivalent weight: 110 g/eq)
(b2) Monofunctional (meth)acrylate compound
(B-4): Isobornyl acrylate (trade name: Light Acrylate IBXA, available from Kyoeisha Chemical Co., Ltd., (meth)acryloyl equivalent weight: 208 g/eq)
(B-5): 4-t-butylcyclohexyl acrylate (trade name: Kohsilmer^{®} TBCHA^{®}, available from KJ Chemicals Corporation, (meth)acryloyl equivalent weight: 198 g/eq)

### - (C) Polyfunctional thiol compound

The compounds used as the (C) polyfunctional thiol compound in the examples and comparative examples are as follows.
(C-1): Pentaerythritol tetrakis(3-mercaptopropionate) (trade name: PEMP, available from SC Organic Chemical Co., Ltd., thiol equivalent weight: 122 g/eq)
(C-2): 1,3,4,6-Tetrakis(3-mercaptopropyl)glycoluril (trade name: C3 TS-G, available from Shikoku Chemicals Corporation, thiol equivalent weight: 114 g/eq)

### - (D) Photo-radical initiator

(D-1): 1-hydroxy-cyclohexyl-phenyl-ketone (trade name: Omnirad 184, available from IGM Resins B.V.)
(D-2): 2,4,6-trimethylbenzoyl diphenylphosphine oxide (trade name: Omnirad TPO, available from IGM Resins B.V.)

### - (E) Thermal curing accelerator

In the examples and comparative examples, the compounds used as the (E) thermal curing accelerator are as follows.
(E-1): Amine-epoxy adduct-type latent curing catalyst 1 (trade name: Fujicure FXR1121, available from T & K TOKA Co., Ltd.)
(E-2): Amine-epoxy adduct-type latent curing catalyst 2 (trade name: Ajicure PN-23, available from Ajinomoto Fine-Techno Co., Inc.)

### - (F) Epoxy resin

The compounds used as the (F) epoxy resin in the examples and comparative examples are as follows.
(F-1): Bisphenol A epoxy resin (trade name: JER834, available from Mitsubishi Chemical Group Corporation; epoxy equivalent weight: 250 g/eq)
(F-2): 1,4-cyclohexanedimethanol diglycidyl ether (trade name: Showfree^{®} CDMDG, available from Showa Denko K.K., epoxy equivalent weight: 136 g/eq)

### - (G) Other additives

### (g1) Filler

The compounds used as a filler in the examples and comparative examples are as follows.
(G-1): Synthetic spherical silica (trade name: SE2200SEE, available from Admatechs Company Limited)
(G-2): Fine-particle talc (trade name: 5000 PJ, available from Matsumura Sangyo Co., Ltd.)

### (g2) Stabilizer

In the examples and comparative examples, the compounds used as a stabilizer are as follows.

### (G-3): Triisopropylborate (available from Tokyo Chemical Industry Co., Ltd.)

### (G-4): N-nitroso-N-phenylhydroxylamine aluminum salt (available from FUJIFILM Wako Pure Chemical Corporation)

### (g3) Thixotropic agent

In the examples and comparative examples, the compounds used as a thixotropic agent are as follows.

### (G-5): Fumed silica (trade name: CAB-O-SIL^{®} TS-720, available from Cabot Corporation, surface treated with polydimethylsiloxane)

The symbols in the tables represent the following. [(A)+(b1)+(b2)+(F)]/(C): [total number of (meth)acryloyl groups for the (A) urethane compound + total number of (meth)acryloyl groups for the (b1) polyfunctional (meth)acrylate compound + total number of (meth)acryloyl groups for the (b2) monofunctional (meth)acrylate compound + total number of epoxy groups for the (F) epoxy resin] / [total number of thiol groups for the (C) polyfunctional thiol compound] (A)/(C): [total number of (meth)acryloyl groups for the (A) urethane compound] / [total number of thiol groups for the (C) polyfunctional thiol compound] [(A) + (b1)]/(c): [total number of (meth)acryloyl groups for the (A) urethane compound + total number of (meth)acryloyl groups for the (b1) polyfunctional (meth)acrylate compound] / [total number of thiol groups for the (C) polyfunctional thiol compound] (b2)/(C): [total number of (meth)acryloyl groups for the (b2) monofunctional (meth)acrylate compound] / [total number of thiol groups for the (C) polyfunctional thiol compound] (F)/(C): [total number of epoxy groups for the (F) epoxy resin] / [total number of thiol groups for the (C) polyfunctional thiol compound]

### (Evaluation of Heat-curability)

Two glass plates were coated each with a silicone mold release agent. Two rectangular-shaped, 0.3 mm high polyimide spacers were placed on the surface coated with the mold release agent of one of these glass plates, and a curable resin composition was applied between the spacers. The other glass plate was placed on this glass plate with the mold release agent-coated side down, so that the curable resin composition and the spacers were sandwiched between the two glass plates. The curable resin composition between two glass plates was subjected to thermal curing treatment by heating at 80°C for 60 minutes in an air dryer.

The heat-curability of the curable resin compositions was evaluated based on whether or not the curable resin compositions formed a film that could be peeled off while maintaining its shape at the completion of the thermal curing process. The symbol "O" in the tables indicates that the curable resin composition formed a film that could be peeled off while maintaining its shape at the completion of the thermal curing process. The symbol "X" in the table indicates that the curable resin composition did not form a film that could be peeled off while maintaining its shape at the completion of the thermal curing process.

### (Evaluation of Drop Resistance)

The resin compositions that received a "O" for the above (evaluation of heat-curability) were evaluated for drop resistance as follows.

A 150 µm thick polyimide film with 2 mm diameter holes was used to print the curable resin composition at eight locations on a 2.5 cm × 7.5 cm × 2 mm liquid crystal polymer (LAPEROS^{®} E463i, available from POLYPLASTICS CO., LTD.) plate (hereinafter referred to as "LCP plate") by stencil printing, so that the curable resin composition was printed in a circular pattern. The composition after printing was 2 mm Φ and 0.1 mm thick. Eight alumina chips, each 1.5 mm × 3 mm × 0.5 mm, were placed on the printed curable resin composition with the 1.5 mm × 0.5 mm side down. The curable resin composition was subjected to UV curing treatment by UV irradiation at an integrated light intensity of 2000 mJ/cm² (measured with a UIT-250 (connected to a UVD-365 light receiver) available from Ushio Inc.) using a UV LED irradiation device AC475 available from Excelitas Technologies Corp, followed by thermal curing treatment by heating at 80°C for 60 minutes in an air dryer, to bond alumina chips to the LCP plate. The LCP plate to which the alumina chips were bonded was used as a sample, and a drop test was conducted using a fully automatic drop test apparatus FIT-18 (available from Hitachi Technologies and Services, Ltd.) as follows.

The above sample was fixed to the fixing jig (total weight 160g) attached to the above test apparatus so that it would not come off due to the impact of a fall. In this case, in the state where the sample was set in the test apparatus with the entire fixing jig, the side of the sample to which the alumina chips were bonded was placed on top, and the LCP plate was set to be level with the ground. The sample was then subjected to a drop impact by forcibly dropping the sample with the fixing jig. The forced drop of the sample was performed under conditions where the velocity immediately before impact was 5424 mm/s by properly setting up the test apparatus. For one sample, the above drop test was repeated until all eight bonded alumina chips were removed.

Drop resistance was evaluated based on the number of drop tests required before all eight alumina chips came off. When the number of drop tests was 5 or more times, the drop resistance was evaluated as "O". When the number of drop tests was less than 5 times, the drop resistance was evaluated as "x". The results are shown in Table 1.

**[Table 1-1]**

| Table 1 | | | | | | | | | | | |
|---|---|---|---|---|---|---|---|---|---|---|---|
| | | | Example 1 | Example 2 | Example 3 | Example 4 | Example 5 | Example 6 | Example 7 | Example 8 | Example 9 |
| (A) | | (A - 1) | 10.00 | 30.00 | 20.00 | 10.00 | | | | | |
| | | (A - 2) | | | | | 30.00 | | | | |
| | | (A - 3) | | | | | | 10.00 | | | |
| | | (A - 4) | | | | | | | 10.00 | | |
| | | (A - 5) | | | | | | | | 10.00 | |
| | | (A - 6) | | | | | | | | | 10.00 |
| (B) | (b 1) | (B - 1) | 42.84 | 31.33 | 21.22 | 23.11 | 17.77 | 42.84 | 23.11 | 23.11 | 23.11 |
| | | (B - 2) | | | | | | | | | |
| | | (B - 3) | | | | | | | | | |
| | (b 2) | (B - 4) | | | | 10.54 | 6.95 | | 10.54 | 10.54 | 10.54 |
| | | (B - 5) | | | | | | | | | |
| (C) | | (C - 1) | 34.76 | 26.27 | 46.38 | 31.29 | 24.53 | 34.76 | 31.29 | 31.29 | 31.29 |
| | | (C - 2) | | | | | | | | | |
| (D) | | (D - 1) | 0.20 | 0.20 | 0.20 | 0.20 | 0.20 | 0.20 | 0.20 | 0.20 | 0.20 |
| | | (D - 2) | | | | | | | | | |
| (E) | | (E - 1) | 2.00 | 2.00 | 2.00 | 2.00 | 2.00 | 2.00 | 2.00 | 2.00 | 2.00 |
| | | (E - 2) | | | | | | | | | |
| (F) | | (F - 1) | | | | 12.67 | 8.35 | | 12.67 | 12.67 | 12.67 |
| | | (F - 2) | | | | | | | | | |
| (g 1) | | (G - 1) | | | | | | | | | |
| | | (G - 2) | | | | | | | | | |
| (g 2) | | (G - 3) | 0.20 | 0.20 | 0.20 | 0.20 | 0.20 | 0.20 | 0.20 | 0.20 | 0.20 |
| | | (G - 4) | | | | | | | | | |
| (g 3) | | (G - 5) | 10.00 | 10.00 | 10.00 | 10.00 | 10.00 | 10.00 | 10.00 | 10.00 | 10.00 |
| Total | | | 100 | 100 | 100 | 100 | 100 | 100 | 100 | 100 | 100 |
| [(A)+(b1)+(b2)+(F)] /(C) | | | 1.00 | 1.00 | 0.38 | 1.00 | 1.10 | 0.99 | 0.99 | 0.99 | 1.00 |
| (A)/(C) | | | 0.011 | 0.043 | 0.016 | 0.012 | 0.19 | 0.0039 | 0.0052 | 0.0060 | 0.009 |
| [(A)+(b1)] /(C) | | | 1.00 | 1.00 | 0.38 | 0.60 | 0.77 | 0.99 | 0.60 | 0.60 | 0.60 |
| (b2)/(C) | | | 0.00 | 0.00 | 0.00 | 0.20 | 0.17 | 0.00 | 0.20 | 0.20 | 0.20 |
| (F)/(C) | | | 0.00 | 0.00 | 0.00 | 0.20 | 0.17 | 0.00 | 0.20 | 0.20 | 0.20 |
| Heat-curability | | | ○ | ○ | ○ | ○ | ○ | ○ | ○ | ○ | ○ |
| Drop resistance | | | ○ | ○ | ○ | ○ | ○ | ○ | ○ | ○ | ○ |

**[Table 1-2]**

| Table 1 (Continued) | | | | | | | | | | |
|---|---|---|---|---|---|---|---|---|---|---|
| | | | Example 10 | Example 11 | Example 12 | Example 13 | Example 14 | Example 15 | Example 16 | Example 17 |
| (A) | | (A - 1) | 10.00 | 10.00 | 10.00 | 10.00 | 10.00 | 15.00 | 15.00 | 40.00 |
| | | (A - 2) | | | | | | | | |
| | | (A - 3) | | | | | | | | |
| | | (A - 4) | | | | | | | | |
| | | (A - 5) | | | | | | | | |
| | | (A - 6) | | | | | | | | |
| (B) | (b 1) | (B - 1) | | | 19.65 | 22.83 | 28.82 | 30.71 | 29.84 | 16.46 |
| | | (B - 2) | 34.77 | | | | | | | |
| | | (B - 3) | | 20.58 | | | | | | |
| | (b 2) | (B - 4) | 4.87 | 10.02 | | 6.64 | 6.57 | 10.51 | | 3.22 |
| | | (B - 5) | | | 22.70 | | | | | |
| (C) | | (C - 1) | 32.11 | 34.95 | 28.39 | 32.93 | | 31.38 | 30.50 | 20.38 |
| | | (C - 2) | | | | | 34.31 | | | |
| (D) | | (D - 1) | 0.20 | 0.20 | 0.20 | 0.20 | 0.20 | | 0.20 | 0.20 |
| | | (D - 2) | | | | | | 0.20 | | |
| (E) | | (E - 1) | 2.00 | 2.00 | 2.00 | 2.00 | 2.00 | 2.00 | | 2.00 |
| | | (E - 2) | | | | | | | 2.00 | |
| (F) | | (F - 1) | 5.85 | 12.05 | 6.87 | | 7.90 | | 12.27 | 7.74 |
| | | (F - 2) | | | | 15.20 | | | | |
| (g 1) | | (G - 1) | | | | | | | | |
| | | (G - 2) | | | | | | | | |
| (g 2) | | (G - 3) | 0.20 | 0.20 | 0.20 | 0.20 | 0.20 | 0.20 | 0.20 | |
| | | (G - 4) | | | | | | | | |
| (g 3) | | (G - 5) | 10.00 | 10.00 | 10.00 | 10.00 | 10.00 | 10.00 | 10.00 | 10.00 |
| Total | | | 100 | 100 | 100 | 100 | 100 | 100 | 100 | 100 |
| [(A)+(b1)+(b2)+(F)] /(C) | | | 1.00 | 1.00 | 1.18 | 1.10 | 0.85 | 1.00 | 1.00 | 1.00 |
| (A)/(C) | | | 0.012 | 0.011 | 0.013 | 0.011 | 0.010 | 0.018 | 0.018 | 0.074 |
| [(A)+(b1)] /(C) | | | 0.82 | 0.67 | 0.57 | 0.57 | 0.64 | 0.80 | 0.80 | 0.72 |
| (b2)/(C) | | | 0.09 | 0.17 | 0.49 | 0.12 | 0.10 | 0.20 | 0.00 | 0.09 |
| (F)/(C) | | | 0.09 | 0.17 | 0.12 | 0.41 | 0.10 | 0.00 | 0.20 | 0.19 |
| Heat-curability | | | ○ | ○ | ○ | ○ | ○ | ○ | ○ | ○ |
| Drop resistance | | | ○ | ○ | ○ | ○ | ○ | ○ | ○ | ○ |

**[Table 1-3]**

| Table 1 (Continued) | | | | | | | | | |
|---|---|---|---|---|---|---|---|---|---|
| | | | Example 18 | Example 19 | Example 20 | Com.Ex. 1 | Com.Ex. 2 | Com.Ex. 3 | Com.Ex. 4 |
| (A) | | (A - 1) | 10.00 | 10.00 | 10.00 | | 65.00 | 40.00 | 10.00 |
| | | (A - 2) | | | | | | | |
| | | (A - 3) | | | | | | | |
| | | (A - 4) | | | | | | | |
| | | (A - 5) | | | | | | | |
| | | (A - 6) | | | | | | | |
| (B) | (b 1) | (B - 1) | 31.24 | 22.28 | 27.59 | 48.60 | 7.22 | 20.00 | 19.72 |
| | | (B - 2) | | | | | | | |
| | | (B - 3) | | | | | | | |
| | (b 2) | (B - 4) | 9.16 | 6.53 | 8.09 | | 2.12 | 20.00 | |
| | | (B - 5) | | | | | | | |
| (C) | | (C - 1) | 36.19 | 25.93 | 32.00 | 39.00 | 10.72 | 7.60 | 57.88 |
| | | (C - 2) | | | | | | | |
| (D) | | (D - 1) | 0.20 | 0.20 | 0.20 | 0.20 | 0.20 | 0.20 | 0.20 |
| | | (D - 2) | | | | | | | |
| (E) | | (E - 1) | 2.00 | 2.00 | 2.00 | 2.00 | 2.00 | 2.00 | 2.00 |
| | | (E - 2) | | | | | | | |
| (F) | | (F - 1) | 11.01 | 7.85 | 9.72 | | 2.54 | | |
| | | (F - 2) | | | | | | | |
| (g 1) | | (G - 1) | | 20.00 | | | | | |
| | | (G - 2) | | | 10.00 | | | | |
| (g 2) | | (G - 3) | 0.20 | 0.20 | 0.20 | | | | |
| | | (G - 4) | | | 0.20 | 0.20 | 0.20 | 0.20 | 0.20 |
| (g 3) | | (G - 5) | | 5.00 | | 10.00 | 10.00 | 10.00 | 10.00 |
| Total | | | 100 | 100 | 100 | 100 | 100 | 100 | 100 |
| [(A)+(b1)+(b2)+(F)] /(C) | | | 1.00 | 1.00 | 1.00 | 1.00 | 1.00 | 3.85 | 0.28 |
| (A)/(C) | | | 0.010 | 0.014 | 0.012 | 0.000 | 0.23 | 0.20 | 0.0065 |
| [(A)+(b1)] /(C) | | | 0.70 | 0.70 | 0.70 | 1.00 | 0.77 | 2.31 | 0.28 |
| (b2)/(C) | | | 0.15 | 0.15 | 0.15 | 0.00 | 0.12 | 1.54 | 0.00 |
| (F)/(C) | | | 0.15 | 0.15 | 0.15 | 0.00 | 0.12 | 0.00 | 0.00 |
| Heat-curability | | | ○ | ○ | ○ | ○ | × | × | × |
| Drop resistance | | | ○ | ○ | ○ | × | - | - | - |

### (Consideration of Results)

As is clear from Table 1, parts (adherends) bonded by UV curing and thermal curing using the curable resin compositions of Examples 1 to 20 containing appropriate amounts of the (A) urethane compound, the (B) (meth)acrylate compound, the (C) polyfunctional thiol compound, the (D) photo-radical initiator and the (E) thermal curing accelerator were difficult to come off even if impacted by a drop. All of the curable resin compositions of Examples 1 to 20 were sufficiently cured even when subjected only to thermal curing treatment. All of the curable resin compositions of Examples 1 to 20 were sufficiently cured even when subjected only to the above UV curing treatment.

On the other hand, parts (adherends) bonded by UV curing and thermal curing using the curable resin composition wherein [total number of (meth)acryloyl groups for the (A) urethane compound] / [total number of thiol groups for the (C) polyfunctional thiol compound] is less than 0.001, came off when subjected to impact due to dropping (Comparative Example 1). The curable resin composition wherein [total number of (meth)acryloyl groups for the (A) urethane compound] / [total number of thiol groups for the (C) polyfunctional thiol compound] is more than 0.2, was not sufficiently cured when subjected only to thermal curing treatment (Comparative Example 2).

The curable resin compositions wherein [total number of (meth)acryloyl groups for the (A) urethane compound + total number of (meth)acryloyl groups for the (B) (meth)acrylate compound] / [total number of thiol groups for the (C) polyfunctional thiol compound] is not in the range of 0.5 to 1.3 were not sufficiently cured when subjected to thermal curing treatment only (Comparative Examples 3 to 4).

### Industrial applicability

The curable resin composition of the present invention, through UV curing treatment and subsequent heat curing treatment, gives a cured product with moderate flexibility and elongation, and with improved shock-absorbing capacity compared to cured products provided by conventional UV- and thermo-curable adhesives. The curable resin composition of the present invention also exhibits high curability even when subjected only to thermal curing treatment. As a result, the curable resin composition of the present invention has excellent adhesive reliability, and even if an assembly made using the curable resin composition is subjected to impact due to dropping, etc., peeling of parts (adherends) is prevented. Therefore, the curable resin composition of the present invention is very useful for bonding parts of sensor modules, etc.

The disclosure of Japanese Patent Application No. 2021-116461 (filing date: July 14, 2021) is incorporated herein by reference in its entirety.

All references, patent applications, and technical standards described herein are incorporated herein by reference to the same extent as if the individual references, patent applications, and technical standards were specifically and individually noted as being incorporated by reference.

## Claims

1. A curable resin composition comprising the following components (A) to (E):
(A) an urethane compound containing a (meth)acryloyl group(s),
(B) a (meth)acrylate compound containing no urethane bond,
(C) a polyfunctional thiol compound,
(D) a photo-radical initiator, and
(E) a thermal curing accelerator,
wherein
the (B) (meth)acrylate compound contains a polyfunctional (meth)acrylate compound, [total number of (meth)acryloyl groups for the (A) urethane compound] / [total number of thiol groups for the (C) polyfunctional thiol compound] is 0.001 to 0.2, and [total number of (meth)acryloyl groups for the (A) urethane compound + total number of (meth)acryloyl groups for the (B) (meth)acrylate compound] / [total number of thiol groups for the (C) polyfunctional thiol compound] is 0.5 to 1.3.

2. The curable resin composition according to claim 1, wherein the (B) (meth)acrylate compound further contains a monofunctional (meth)acrylate compound.

3. The curable resin composition according to claim 1 or 2, which further contains (F) an epoxy resin, wherein [total number of (meth)acryloyl groups for the (A) urethane compound + total number of (meth)acryloyl groups for the (B) (meth)acrylate compound+ total number of epoxy groups for the (F) epoxy resin] / [total number of thiol groups for the (C) polyfunctional thiol compound] is 0.5 to 1.3, and [total number of epoxy groups for the (F) epoxy resin] / [total number of thiol groups for the (C) polyfunctional thiol compound] is <0.6.

4. The curable resin composition according to any one of claims 1 to 3, wherein the (C) polyfunctional thiol compound has three or more thiol groups.

5. The curable resin composition according to any one of claims 1 to 4, wherein the (C) polyfunctional thiol compound contains a trifunctional thiol compound and/or a tetrafunctional thiol compound.

6. The curable resin composition according to any one of claims 1 to 5, wherein the (A) urethane compound includes an urethane compound containing two (meth)acryloyl groups.

7. An adhesive comprising the curable resin composition according to any one of claims 1 to 6.

8. A cured product obtainable by curing the curable resin composition according to any one of claims 1 to 6 or the adhesive according to claim 7.

9. A semiconductor device comprising the cured product according to claim 8.

10. A sensor module comprising the cured product according to claim 8.
